# EUROPÄISCHE PATENTANMELDUNG

(11) **EP 1 655 329 A1**
(43) Veröffentlichungstag der Anmeldung: **10.05.2006**
(21) Anmeldenummer: 05022908.7
(22) Anmeldetag: 20.10.2005
(51) Int. Cl.: C08K 3/22, C08L 83/04, A23G 1/22

(54) **Wärmeleitfähige und mikrowellenaktive Silikonmassen und deren Verwendung für Lebensmittelformen**

(30) Priorität: 04.11.2004 DE 102004053309
(71) Anmelder: Wacker Chemie AG, 81737 München (DE)
(72) Erfinder: Weidinger, Jürgen, Dr., 84570 Polling (DE)
(74) Vertreter: Renner, Thomas

(57) **Zusammenfassung**

Die Erfindung betrifft die Verwendung von Siliconelastomeren enthaltend Füllstoffe und Additive zur Vernetzung sowie Stabilisierung für die Herstellung von wärmeleitfähigen oder mikrowellenaktiven sowie wärmeleitfähigen und mikrowellenaktiven, für Lebensmittel geeignete Formen, insbesondere Bäckereiformen und Backblechen.

## Beschreibung

Die Erfindung betrifft die Verwendung von Siliconelastomeren enthaltend Füllstoffe und Additive zur Vernetzung sowie Stabilisierung für die Herstellung von wärmeleitfähigen oder mikrowellenaktiven sowie wärmeleitfähigen und mikrowellenaktiven, für Lebensmittel geeignete Formen, insbesondere Bäckereiformen und Backblechen.

Für Lebensmittel geeignete Formen für die Süßwaren-, Konditorei- oder Nahrungsmittelindustrie, wie beispielsweise zum Schmelzen, Erhitzen und zur Formgebung von Lebensmitteln, wie beispielsweise Butter, Eis, Schokolade oder Pralinen, sowie Bäckereiformen und Backbleche, nachfolgend zusammenfassend als Lebensmittelformen bezeichnet, sind bekannt und werden in der Regel aus Metall, Ton, Porzellan, Kunststoffen, wie beispielsweise Polycarbonat, oder Glas hergestellt. Die Verwendung solcher Backformen hat den Nachteil, dass das Entfernen oder Ausgießen der Lebensmittel aus der Lebensmittel geeigneten Form, wie beispielsweise einer Backform, schwierig ist, da die Formen starr und unbeweglich sind. Zur Verbesserung wurden deshalb in einigen Fällen komplizierte Backformen entwickelt, die über einen technisch aufwändigen Mechanismus zu öffnen sind und so das Backgut entfernt werden kann. Dies führt jedoch zu einer gewerblich nur bedingt anwendbaren Lösung, da zum einen ein technisch aufwändiger Mechanismus nötig ist und zum anderen nur ganz bestimmte Geometrien der Backformen ermöglicht werden. Im europäischen Patent EP 0 992 195 B1 wird die Verwendung von additionsvernetzenden Silicon für die Herstellung von Konditorwarenformen, Backblechen und -platten beschrieben. Vorteile in Bezug auf die zuvor genannten Backformen sind dabei, dass das Silicon elastisch und flexibel ist und damit das fertiggestellte Backgut als Gebackenes einfach aus der Backform entfernt werden kann. Bedingt durch die Haftungseigenschaften des Silicons ist der Reinigungsaufwand der Siliconbackform gering, da das Backgut weitgehend rückstandsfrei aus der Form entnommen werden kann. Des weiteren weist Silicon eine gute physikalische und chemische Beständigkeit gegen Sauerstoff, UV-Strahlung und Ozon auf. Weitere Vorteile sind, dass das Silicon inert gegenüber Lebensmittel ist und als physiologisch unbedenklich gilt. Die selben Vorteile gelten auch für Lebensmittelformen allgemein, wie beispielsweise zur Formgebung von Butter, Schokolade, Pralinen oder Eis, wobei hier noch zusätzlich der Vorteil der Kälteflexibilität von Siliconelastomeren zu tragen kommt.

Nachteile der Silicone, die bisher für derartige Verwendung beschrieben wurden, sind die geringe Wärmeleitfähigkeit des Materials mit einer durchschnittlichen Wärmeleitfähigkeit von 0,2-0,3 W/mK. Dies führt zu einer längeren Heizzeit oder Kühlzeit und damit zu höherem Energieaufwand und Zeitverlust. Weiterhin sind diese Silicone aufgrund ihres chemischphysikalischen Charakters nicht mikrowellenaktiv und damit nicht auf dem einfachen Weg der Mikrowelleneinstrahlung erhitzbar.

In der europäischen Offenlegungsschrift EP 1 132 000 A1 wird eine Lebensmittelform beschrieben, welche als Füllstoff Ferrit enthält. Dieser Füllstoff absorbiert Mikrowellen. In der Patentschrift US 4,496,815 wird eine ferrithaltige Siliconbeschichtung auf einem Träger beschrieben, welche wiederum eine Beschichtung zum Schutz benötigt. In der koreanischen Patentschrift KR 9612735 B1 wird ein ferritgefülltes Siliconharz beschrieben. Im Patent US 4,542,271 wird die Verwendung von Magnetit als mikrowellenaktivem Füllstoff in einer Kunststoffmatrix beschrieben. Magnetit wird dabei in eine starre Masse eingebettet und gelangt nicht in direkten Kontakt mit Lebensmitteln. All diesen beschriebenen Anwendungen ist ein hoher Aufwand bei der Herstellung des Endteils gemein.

In der Patentschrift US 6,555,905 B2 wird die Verwendung wärmeleitfähig eingestellter Siliconmassen beschrieben für technische Anwendungen, wie beispielsweise Wärmeableitung aus elektronischen Bauteilen, wie beispielsweise in Computerchips.

Ferrit als wärmeleitender Füllstoff in Siliconzusammensetzungen hat mehrere Nachteile, die es als alleinigen Füllstoff sowohl zur Erzielung einer notwendigen Wärmeleitfähigkeit als auch reproduzierbarer Mikrowellenheizbarkeit nicht geeignet erscheinen lassen.

Durch den schwankenden Gehalt an Verunreinigungen und Schwermetallen ist ein gefahrenfreier Kontakt mit Lebensmitteln nicht möglich. Die Empfindlichkeit gegenüber äußeren Einflüssen, wie beispielsweise Oxidation wie in US 4,496,815 beschrieben, kann zu einer Verminderung der Mikrowellenaktivität führen. Die Frequenzbänder, welche überwiegend von haushaltsüblichen Mikrowellen verwendet werden, liegen weitgehendst außerhalb der Wellenlängenbereiche, in denen Ferrit durch Mikrowellen angeregt werden kann. Die Verschlechterung der mechanischen und anderer physikalischen Eigenschaften bei der Verarbeitung der Mischung, wie beispielsweise die erhöhte Klebrigkeit und Abrasivität, erschwert die Herstellung und Verwendung der daraus gefertigten Endteile. Selbst bei hohen Füllgraden ist keine signifikante Verbesserung der Wärmeleitfähigkeit möglich. Eine Steigerung um mehr als den Faktor 1,3 konnten nicht erzielt werden. Die wird in Zeichnung 1, Säule (1), dargestellt.

Gut wärmeleitfähige Füllstoffe, wie beispielsweise Bornitrid oder Aluminiumoxid haben den Nachteil, dass sie meist nicht mikrowellenaktiv sind und in unbehandelter Form eine Verschlechterung der mechanischen Eigenschaften der verwendeten Silicone nach sich ziehen können.

Die Einbettung von Magnetit, Ferrit oder anderen Füllstoffen in Duromere oder hochhitzebeständige Elastomere, wie beispielsweise Fluor-Kautschuke (FKM, FPM) oder Polyfluorsilicone (FVMQ), ist möglich, jedoch verliert man in ersterem Fall an mechanischer Performance und Flexibilität, im letzteren Fall an Ökonomie und Lebensmitteleignung der Produkte. Zudem ist meist eine aufwändige Ver- oder Einarbeitung damit verbunden. Diese Methoden kommen also für die Herstellung von Lebensmittelformen primär nicht in Frage.

Aufgabe der Erfindung ist es daher, Silicone zur Herstellung von Lebensmittelformen zur Verfügung zu stellen, welche die erwünschten guten Eigenschaften wie beispielsweise hohe Flexibilität, Antihaftwirkung, verminderte Masseklebrigkeit oder Abrasivität und Lebensmittelechtheit, sowie hohe Wärmeleitfähigkeit und gute Mikrowellenaktivität in Bezug auf handelsüblich verwendete Frequenzbänder aufweisen.

Die Aufgabe konnte durch die Verwendung von Siliconen, die mit behandelten, unbehandelten oder Mischungen von behandelten mit unbehandelten wärmeleitfähigen, mikrowellenaktiven oder wärmeleitfähigen und mikrowellenaktiven Füllstoffen versetzt wurden, gelöst werden.

Gegenstand der vorliegenden Erfindung ist daher die Verwendung von speziell gefüllten Siliconelastomeren für das Herstellen von verbessert wärmeleitfähigen, mikrowellenaktiven oder wärmeleitfähigen und mikrowellenaktiven Lebensmittelformen. Die Verwendung von Siliconelastomeren, die mit diesen speziellen Füllstoffen gefüllt sind, zeichnet sich dadurch aus, dass die Vorteile der Silicone, wie Kälteflexibilität, Hitzebeständigkeit, Antihafteigenschaften, Lebensmittelverträglichkeit, leichte Verarbeitung, uneingeschränkt bestehen, und zusätzlich die resultierenden Siliconelastomere verbessert Wärme transportieren bzw. zusätzlich durch Mikrowellenstrahlung, auch aus haushaltsüblichen, d.h. nicht spezifisch frequenzmodulierten, Mikrowellen, schnell und effizient erhitzbar sind.

Die mit wärmeleitfähigen, mikrowellenaktiven oder wärmeleitfähigen und mikrowellenaktiven Füllstoffen versetzten Siliconmassen setzen sich aus folgenden Bestandteilen zusammen:
(A) einem oder mehreren, mindestens eine ungesättigte Gruppe aufweisenden, Polydiorganosiloxan, bestehend aus chemisch miteinander verbundenen Struktureinheiten der allgemeinen Formel (1)

   RₐR¹_{b}SiO_{(4-a-b)/2} (1)

   oder einem oder mehreren, mindestens eine substituierte Hydroxylgruppe aufweisenden, Polydiorganosiloxan, bestehend aus miteinander verbundenen Struktureinheiten der allgemeinen Formel (1),
   wobei
   - **R**: gleich oder verschieden sein kann und einen von aliphatischen Kohlenstoff-Kohlenstoff-Mehrfachbindungen freien, gegebenenfalls substituierten organischen Kohlenwasserstoffrest mit bis zu 18 C-Atomen bedeutet,
   - **R**^{**1**}: gleich oder verschieden sein kann und eine substituierte Hydroxylgruppe oder einen einwertigen, gegebenenfalls substituierten, gegebenenfalls über eine organische zweiwertige Gruppe an das Siliciumatom gebundenen Kohlenwasserstoffrest mit 2 bis 14 Kohlenstoffatomen und mit aliphatischer KohlenstoffKohlenstoff-Mehrfachbindung (Doppelbindung oder Dreifachbindung) oder mindestens einer substituierten Hydroxylgruppe bedeutet,
   - **a**: 0, 1, 2 oder 3 ist und
   - **b**: 0, 1 oder 2 ist,
   mit der Maßgabe, dass die Summe a + b kleiner oder gleich 3 ist und im Durchschnitt mindestens 2 Reste R¹ je Molekül vorliegen,
(B) einem geeigneten Vernetzungssystem, ausgewählt aus der Gruppe enthaltend Kondensations-, Peroxid- und Additionsvernetzungssysteme,
(C) mindestens einem behandelten oder unbehandelten mikrowellenaktiven, wärmeleitfähigen oder mikrowellenaktiven und wärmeleitfähigen Füllstoff in Gewichtanteilen bezogen auf (A) von 1 bis 300 Teilen.

Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylrest, Xylylreste und Ethylphenylreste, und Aralkylreste, wie der Benzylrest, der α- und der β-Phenylethylrest.

Beispiele für substituierte Reste **R** sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest.

Bevorzugt handelt es sich bei Rest **R** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Der Rest **R**^{**1**} ist bevorzugt eine einer Anlagerungsreaktion (Hydrosilylierung) mit einer SiH-funktionellen Verbindung zugängliche Gruppe, ein substituierter Hydroxylrest oder ein eine aliphatische oder aromatische Seitenkette mit substituierten Hydroxylresten.

Bevorzugt handelt es sich bei Rest **R**^{**1**} um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste und substituierte Reste wie Allyloxy- und Vinyloxyreste, wobei Vinyl-, Allyl- und Hexenylreste besonders bevorzugt sind.

Das Molekulargewicht des Bestandteils (A) liegt vorzugsweise zwischen 10² und 10⁶ g/mol. Beispielsweise kann der Bestandteil (A) um ein relativ niedermolekulares alkenylfunktionelles Oligosiloxan, wie 1,2-Divinyltetramethyldisiloxan, oder ein über kettenständige oder endständige Si-gebundene Vinylgruppen verfügendes hochpolymeres Polydimethylsiloxan mit einem Molekulargewicht von beispielsweise 10⁵ g/mol bedeuten. Molekulargewicht im Sinne dieser Schrift sind das mittels NMR bestimmtes Zahlenmittel. In einer weiteren Ausführungsform kann der Bestandteil (A) die Struktur eines höhermolekularen, also oligomeren oder polymeren Siloxans linear, cyclisch, verzweigt oder auch harzartig, netzwerkartig bedeuten. Lineare und cyclische Polysiloxane sind vorzugsweise aus Einheiten der Formel R₃SiO_{1/2}, R¹R₂SiO_{1/2}, R¹RSiO_{2/2} und R₂SiO_{2/2} zusammengesetzt, wobei R und R¹ die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, R¹SiO_{3/2} und SiO_{4/2} bevorzugt sind. Weiterhin bevorzugt sind auch Mischungen unterschiedlicher, den Kriterien des Bestandteils (A) genügender Siloxane.

Besonders bevorzugt als Komponente (A) ist die Verwendung vinylfunktioneller oder substituiert hydroxyfunktioneller, im wesentlichen linearer Polydiorganosiloxane mit einer Viskosität von 0,01 bis 100 000 Pa·s, besonders bevorzugt von 0,1 bis 30000 Pa·s gemessen bei 25°C.

Die eingesetzten Komponenten (A) und (B) sind handelsübliche Produkte bzw. nach in der Chemie gängigen Verfahren herstellbar.

Die Komponente (C) kann in beliebiger Korngröße, bevorzugt zwischen 0,1 und 1000 µm, besonders bevorzugt zwischen 1 und 500 µm, und in beliebiger Korngrößenverteilung, in Gewichtanteilen bezogen auf (A) von 1 bis 300 Teilen, bevorzugt von 5 bis 200 Teilen eingesetzt werden.

Beispiele für die Komponente (C) mit mikrowellenaktiven Eigenschaften sind Verbindungen ausgewählt aus der Gruppe enthaltend Ferrite und Magnetite. Besonders bevorzugt sind Magnetite.

Beispiele für die Komponente (C) mit wärmeleitfähigen Eigenschaften sind Verbindungen ausgewählt aus der Gruppe enthaltend Metalle und Metalloxide, wie beispielsweise Silber oder Aluminiumoxid, Metall- sowie Nichtmetallcarbide und - nitride, wie beispielsweise Bornitrid, und beliebige Mischungen aus diesen Stoffen und Stoffklassen. Bevorzugt werden diese wärmeleitfähigen Füllstoffe in Verbindung mit mikrowellenaktiven Füllstoffen eingesetzt.

Zur Verbesserung der Einmischbarkeit und der mechanischen Eigenschaften der Lebensmittelform können die erfindungsgemäßen Füllstoffe mit geeigneten Chemikalien behandelt werden, was beispielsweise in Knetern, Mischern, Dissolvern oder Autoklaven erfolgen kann. Als Agenzien zur Behandlung eignen sich beispielsweise Amine, Alkohole und Silane. Bevorzugt sind Silane der allgemeinen Zusammensetzung Si[XRₙ]₄, wobei X ein Nichtmetallatom ausgewählt aus der Gruppe enthaltend C, N, O, P und R einen beliebigen nicht organischer oder organischer Rest bedeuten. Die Verbindung wird so gewählt, dass das Molekül auf die Oberfläche der mikrowellenaktiven Partikel aufzieht und mit diesen eine physikalische oder durch Abspaltung mindestens eines Restes an der Si-X oder der X-R-Bindung eine chemische Verbindung eingeht. Durch die Oberflächenbehandlung mit geeigneten Agenzien wird einerseits eine bessere Dispergierung in der Polymermatrix erreicht, andererseits ist während einer gegebenenfalls folgenden Vernetzung auch eine Anbindung durch Vulkanisation möglich.

Magnetit (formal Fe₃O₄) oder Gemisch von Magnetit mit Ferrit ist als mikrowellenaktiver Füllstoff besonders bevorzugt, da es im Gegensatz zu reinen Ferriten, die größtenteils eine spezifische Einstellung der Strahlung benötigen, innerhalb der von haushaltsüblichen Mikrowellen ausgestrahlten Frequenzbänder sehr aktiv ist. Zudem zeigt Magnetit keine Gefahr des Aktivitätsverlustes wie viele Ferrite, die beispielsweise durch thermische Umwandlung oder Oxidation an Aktivität verlieren können. Außerdem enthält Magnetit von Natur aus sehr wenig kritische Verunreinigungen, wie etwa Schwermetalle, was bei Ferriten nicht der Fall ist. Einige Magnetitsorten können im Sinne lebensmittelrechtlicher Bestimmungen sogar als schwermetallfrei angesehen werden. Zudem ist Magnetit sehr einfach in die Siliconmatrix eincompoundierbar und verändert nicht deren Verarbeitbarkeit. Dahingegen neigt Ferrit zur Bildung schmieriger, klebriger und schwer verarbeitbarer Massen und benötigt mehr Compoundierzeit und -energie. Als zusätzlichen Vorteil in Haushaltsanwendungen bietet Magnetit einen ansprechenden optischen Effekt (Glimmer- oder Teflonähnlich) im Gegensatz zum braunen Ferrit.

Als wärmeleitfähige Füllstoffe sind wenig abrasive und kostengünstige Materialien, wie beispielsweise Aluminiumoxid, besonders bevorzugt.

Die wärmeleitfähigen Füllstoffe können daher alleine oder als Gemische in der Elastomermatrix vorliegen, oder im Gemisch mit mikrowellenaktiven Füllstoffen. Die mikrowellenaktiven Füllstoffe können ebenfalls alleine oder als Gemische in der Elastomermatrix vorliegen oder im Gemisch mit wärmeleitfähigen Füllstoffen.

Zum Aufheizen der Lebensmittelform sind bereits geringe Mengen an mikrowellenaktiven Füllstoffen, bevorzugt 1 Gewichtsanteil (C) auf 100 Gewichtsanteile (A) abhängig von der jeweiligen Aktivität und Dispergierung, ausreichend. Dahingegen sind zum Erzielen einer merklich verbesserten Wärmeleitfähigkeit, d.h. größer als 1 W/mK, höhere Dosierungen notwendig. In Zeichnung 1 sind die Wärmeleitfähigkeiten von primär mikrowellenaktiven Siliconmischungen (1) und (2), jene von primär wärmeleitfähigen Siliconmischungen (5) sowie von Mischungen, welche sowohl wärmeleitfähige als auch primär mikrowellenaktive Füllstoffe enthalten (3)und (4), dargestellt.

Aus Zeichnung 1 geht ferner hervor, dass sich die Wärmeleitfähigkeit durch Auswahl geeigneter Formulierungen um den Faktor 5 und höher steigern lässt.

Die eingesetzten Komponenten (C) sind handelsübliche Produkte bzw. nach in der Chemie gängigen Verfahren herstellbar.

Die erfindungsgemäßen Siliconzusammensetzungen können noch weitere Bestandteile (D) enthalten, die bekannterweise zur Herstellung von Siliconmassen eingesetzt wurden. Beispiele für Bestandteile (D) sind Füllstoffe, wie beispielsweise hydrophobe und hydrophile Kieselsäuren, Quarze und Ruße; Inhibitoren, wie beispielsweise Alkinole und Maleinsäurederivate, Stabilisatoren, wie beispielsweise Hitzestabilisatoren und Farbpigmente.

Die Herstellung der Lebensmittelformen geschieht derart, dass die Bestandteile (A), (B), (C) und gegebenenfalls Bestandteile (D) vermischt werden und anschließend bevorzugt bei 20 bis 220°C, insbesondere 20 bis 190°C, in einer unbeheizten oder beheizten Gieß-, Spritzgieß-, Verdränger- oder Transferform in massiver Siliconform oder auf einem beliebig gearteten Träger vernetzt werden. Die Vernetzungszeit für die Lebensmittelform ist abhängig von der Geometrie der Form, einem eventuellen Trägermaterial und der Wandstärke der Lebensmittelform und liegt bevorzugt zwischen 10 Sekunden und 5 Minuten. Anschließend wird die Siliconlebensmittelform bei Bedarf auf einen Träger verklebt oder montiert und bei Bedarf in einem Ofen unter Luftzufuhr bei einer maximalen Temperatur von ca. 200°C für 4 Std. getempert.

Vorteil der Siliconelastomere, die durch Versetzen mit wärmeleitfähigen, mikrowellenaktiven oder wärmeleitfähigen und mikrowellenaktiven Füllstoffen gewonnen wurden, ist beispielsweise, dass keine Einschränkung bisheriger Vorteile von Siliconformen, wie die freie Wahl der Geometrie der Lebensmittelform resultiert. Es sind auch starke Hinterschnitte möglich. Die speziell gefüllten Massen können, falls erforderlich, in Flüssigkeiten gelöst, dispergiert, suspendiert oder emulgiert werden, um beispielsweise Träger damit zu beschichten. Die erfindungsgemäßen Massen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als einkomponentige, raumtemperatur vernetzende Massen (RTV-1), zweikomponentige, raumtemperatur vernetzende Massen (RTV-2), flüssige Siliconkautschuke (LSR) und hochtemperatur vernetzende Massen (HTV) bezeichneten Massen der Fall sein kann. Hinsichtlich der elastomeren Eigenschaften der speziell gefüllten Siliconmassen wird gleichfalls das gesamte Spektrum umfasst, beginnend bei extrem weichen Silicongelen, über gummiartige Materialien bis hin zu hochvernetzten Siliconen mit glasartigem Verhalten. Dies ermöglicht dem Anwender beispielsweise die Herstellung beliebiger Extrudate oder Formteile mit Mikrowellenaktivität oder verbesserter Wärmeleitfähigkeit oder Mikrowellenaktivität und verbesserter Wärmeleitfähigkeit.

Die Vernetzung bei erhöhten Temperaturen ist aufgrund der Füllstoffe im Vergleich zu Standardformen beschleunigt. Dies bedeutet schnellere und effizientere Produktion. Die erfindungsgemäßen Siliconzusammensetzungen weisen keine nennenswerte Beeinträchtigung von mechanischen und anderen physikalischen Eigenschaften im Vergleich zu Standardsiliconen, insbesondere wenn die Füllstoffe wie oben beschrieben behandelt wurden. Die speziell gefüllten Massen haben zudem den Vorteil, dass sie in einem einfachen Verfahren unter Verwendung leicht zugänglicher Ausgangsstoffe und damit wirtschaftlich hergestellt werden können. Die erfindungsgemäß gefüllten Massen haben weiterhin den Vorteil, dass sie aufgrund der erhöhten Einmischbarkeit der behandelten schweren Füllstoffe (C) eine Einstellung der Dichte bis auf das Vierfache der Ausgangsdichte erlauben, was mit anderen im Elastomerbereich verwendeten Füllstoffen nicht möglich ist. Dies führt zu einem schwereren und "wertigeren", d.h. vom Benutzer als stabiler und qualitativ hochwertig empfundenen, Griff der Lebensmittelformen.

Die erfindungsgemäß gefüllten Massen haben auch den Vorteil, dass durch die Variation des Mischungsverhältnisses von mehreren morphologisch unterschiedlichen mikrowellenaktiven Füllstoffen eine Abdeckung großer Frequenzbänder möglich ist. Daher sind sie universell einsetzbar. Die erfindungsgemäß gefüllten Massen haben des weiteren den Vorteil, dass ihre vernetzten Vulkanisate mit ausschließlich Magnetit als mikrowellenaktivem Füllstoff im direkten Kontakt mit Lebensmitteln verwendet werden können, so dass keine aufwändigen zusätzlichen Beschichtungen oder Träger, wie beispielsweise Aluminium, verwendet werden müssen, um direkten Kontakt, wie etwa mit Ferrit, zu vermeiden.

Die erfindungsgemäß gefüllten Massen haben des weiteren den Vorteil, dass ihre vernetzten Vulkanisate mit ausschließlich oder hauptsächlich Magnetit als mikrowellenaktivem Füllstoff durch Oxidation und/oder Hitze und/oder Chemikalien nicht an Mikrowellenaktivität verlieren, wie etwa nur mit Ferrit. Die erfindungsgemäß gefüllten Massen haben des weiteren den Vorteil, dass daraus hergestellte Lebensmittelformen aufgrund der erhöhten Wärmeleitfähigkeit eine kürzere Heiz- oder Kühlzeit benötigen. Dies bedeutet schnellere, schonendere und effizientere Herstellung von geformten Lebensmitteln.

Aus den speziell gefüllten Massen hergestellte Formen mit mikrowellenaktiven Füllstoffen erlauben schnelles Erhitzen und benötigen kein Nachheizen. Beispielsweise kann das Backgut in der aus der Mikrowelle entnommenen Form verbleiben und bäckt darin weiter. Dies bedeutet direkte Energieersparnis. Aus den erfindungsgemäß gefüllten Massen hergestellte Formen führen zu einer effektiveren Karamellisierung der Zuckerstoffe des Backguts. Dadurch wird die Oberfläche des Backguts brauner und knuspriger im Vergleich zu ungefüllten Siliconformen. Ein zusätzlicher Vorteil der erfindungsgemäß gefüllten Massen ist ihre rasche Vernetzbarkeit durch Mikrowellenstrahlung, wenn die Komponente (C) mindestens einen mikrowellenaktiven Füllstoff in ausreichender Menge enthält, wodurch die Lebensmittelformen auch mittels Mikrowellenstrahlung produziert werden können.

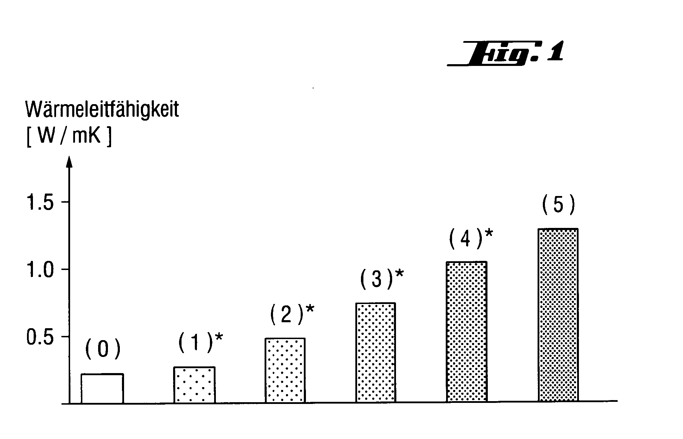

Die Fig. 1 zeigt die Wärmeleitfähigkeiten in Abhängigkeit vom Füllstoff und dessen Gehalt. Die Schraffur zeigt den steigenden Füllgrad an. Dabei ergibt sich, dass die Wärmeleitfähigkeit für Massen mit behandelten und unbehandelten Füllstoffen gleich ist, sich jedoch die Gesamtmechanik unterscheidet. Die Beispiele in Fig. 1 setzen sich wie folgt zusammen:
(0) Standardsilicon bzw. Elastomerbasis
(1) 50 Teile Ferrit auf 100 Teile Elastomerbasis
(2) 80 Teile Magnetit auf 100 Teile Elastomerbasis
(3) 20 Teile Ferrit und 40 Teile Aluminiumoxid auf 100 Teile Elastomerbasis
(4) 20 Teile Magnetit und 50 Teile Aluminiumoxid auf 100 Teile Elastomerbasis
(5) 70 Teile Aluminiumoxid auf 100 Teile Elastomerbasis

Dabei sind die mit (*) gekennzeichneten Beispiele mikrowellenaktive Mischungen.

### Beispiele

Eine Backform identischer Geometrie mit 500 ml Inhalt wird gemäß der beschriebenen Verfahren einmal mit Standardsilicon und einmal mit Magnetit-gefülltem Silicon (siehe Fig. 1, (2)) hergestellt. Ein definierter, identischer Kuchenteig wird zu gleichen Teilen in die Formen gefüllt und die Formen in einen nicht vorgeheizten Standard-Umluftofen gegeben. Dessen Temperatur wird auf 180°C eingestellt. In regelmäßigen Abständen werden sodann Innentemperatur des Teigs und Bräunungsgrad kontrolliert. Der Teig in der gemäß Fig. 1 besser wärmeleitfähigen Form erreicht nach 80% der vorgeschriebenen Backzeit von 30 min den Status des Durchbackens. Der Teig in der Standardform benötigt 30 Minuten.

In einem zweiten Versuch wird die mikrowellenaktive Backform mit einer identischen Teigmischung in der Mikrowelle bei 600 Watt für 5 Minuten erhitzt. Nach dieser Zeit ist der Teig durchgebacken. Es ergibt sich eine Zeiteinsparung von 25 Minuten gegenüber konventionellem Backen in Standardformen bzw. von 20 Minuten gegenüber Backen in wärmeleitfähigen Formen.

## Patentansprüche

1. Verwendung von mit Füllstoffen gefüllten Siliconelastomeren für das Herstellen von wärmeleitfähigen, mikrowellenaktiven oder wärmeleitfähigen und mikrowellenaktiven Lebensmittelformen.

2. Verwendung nach Anspruch 1, **dadurch gekennzeichnet, dass** die mit wärmeleitfähigen, mikrowellenaktiven oder wärmeleitfähigen und mikrowellenaktiven Füllstoffen versetzten Siliconmassen:
(A) mindestens ein, mindestens eine ungesättigte Gruppe aufweisendes, Polydiorganosiloxan, bestehend aus chemisch miteinander verbundenen Struktureinheiten der allgemeinen Formel (1)
RₐR¹_{b}SiO_{(4-a-b)/2} (1)
oder mindestens ein, mindestens eine substituierte Hydroxylgruppe aufweisendes, Polydiorganosiloxan, bestehend aus chemisch miteinander verbundenen Struktureinheiten der allgemeinen Formel (1),
wobei
**R** gleich oder verschieden sein kann und einen von aliphatischen Kohlenstoff-Kohlenstoff-Mehrfachbindungen freien, gegebenenfalls substituierten organischen Kohlenwasserstoffrest mit bis zu 18 C-Atomen bedeutet,
**R**^{**1**} gleich oder verschieden sein kann und eine substituierte Hydroxylgruppe oder einen einwertigen, gegebenenfalls substituierten, gegebenenfalls über eine organische zweiwertige Gruppe an das Siliciumatom gebundenen Kohlenwasserstoffrest mit 2 bis 14 Kohlenstoffatomen und mit aliphatischer Kohlenstoff-Kohlenstoff-Mehrfachbindung (Doppelbindung oder Dreifachbindung) oder mindestens einer substituierten Hydroxylgruppe bedeutet,
**a** 0, 1, 2 oder 3 ist und
**b** 0, 1 oder 2 ist,
mit der Maßgabe, dass die Summe a + b kleiner oder gleich 3 ist und im Durchschnitt mindestens 2 Reste R¹ je Molekül vorliegen,
(B) ein geeignetes Vernetzungssystem, ausgewählt aus der Gruppe enthaltend Kondensations-, Peroxid- und Additionsvernetzungssysteme, und
(C) mindestens einen behandelten, unbehandelten oder eine Mischung von behandelten und unbehandelten wärmeleitfähigen, mikrowellenaktiven, oder wärmeleitfähigen und mikrowellenaktiven Füllstoff in Gewichtsanteilen bezogen auf (A) von 1 bis 300 Teilen
enthalten.

3. Verwendung nach Anspruch 1 oder 2, **dadurch gekennzeichnet, dass** die Füllstoffe (C) eine Korngröße von 1 bis 500 µm aufweisen.

4. Verwendung nach einem der Ansprüche 1 bis 3, **dadurch gekennzeichnet, dass** zumindest ein Füllstoff (C) ausgewählt wird aus der Gruppe enthaltend Ferrite und Magnetite.

5. Verwendung nach einem der Ansprüche 1 bis 3, **dadurch gekennzeichnet, dass** zumindest ein Füllstoff (C) ausgewählt wird aus der Gruppe enthaltend Metalle und Metalloxide, Metall- sowie Nichtmetallcarbide und -nitride und beliebige Mischungen aus diesen Stoffen und Stoffklassen.

6. Verwendung nach Anspruch 5, **dadurch gekennzeichnet, dass** zumindest ein Füllstoff (C) ausgewählt wird aus der Gruppe enthaltend Silber-, Aluminiumoxid und Bornitrid.

7. Verwendung nach einem der Ansprüche 1 bis 6, **dadurch gekennzeichnet, dass** zumindest ein wärmeleitfähiger Füllstoffe in Verbindung mit zumindest einem mikrowellenaktiven Füllstoff eingesetzt wird.

8. Verwendung nach einem der Ansprüche 1 bis 7, **dadurch gekennzeichnet, dass** zumindest ein Füllstoff (C) mit Aminen, Alkoholen oder Silanen oberflächenbehandelt ist.

9. Vernetzbare Siliconmasse enthaltend
(A) mindestens ein, mindestens eine ungesättigte Gruppe aufweisendes, Polydiorganosiloxan, bestehend aus chemisch miteinander verbundenen Struktureinheiten der allgemeinen Formel (1)
RₐR¹_{b}SiO_{(4-a-b)/2} (1)
oder mindestens ein, mindestens eine substituierte Hydroxylgruppe aufweisendes, Polydiorganosiloxan, bestehend aus chemisch miteinander verbundenen Struktureinheiten der allgemeinen Formel (1),
wobei
**R** gleich oder verschieden sein kann und einen von aliphatischen Kohlenstoff-Kohlenstoff-Mehrfachbindungen freien, gegebenenfalls substituierten organischen Kohlenwasserstoffrest mit bis zu 18 C-Atomen bedeutet,
**R**^{**1**} gleich oder verschieden sein kann und eine substituierte Hydroxylgruppe oder einen einwertigen, gegebenenfalls substituierten, gegebenenfalls über eine organische zweiwertige Gruppe an das Siliciumatom gebundenen Kohlenwasserstoffrest mit 2 bis 14 Kohlenstoffatomen und mit aliphatischer Kohlenstoff-Kohlenstoff-Mehrfachbindung (Doppelbindung oder Dreifachbindung) oder mindestens einer substituierten Hydroxylgruppe bedeutet,
**a** 0, 1, 2 oder 3 ist und
**b** 0, 1 oder 2 ist,
mit der Maßgabe, dass die Summe a + b kleiner oder gleich 3 ist und im Durchschnitt mindestens 2 Reste R¹ je Molekül vorliegen,
(B) ein geeignetes Vernetzungssystem, ausgewählt aus der Gruppe enthaltend Kondensations-, Peroxid- und Additionsvernetzungssysteme, und
(C) je mindestens einen behandelten, unbehandelten oder eine Mischung von behandelten und unbehandelten wärmeleitfähigen und mikrowellenaktiven Füllstoff in Gewichtsanteilen bezogen auf (A) von 1 bis 300 Teilen.

10. Siliconmasse gemäß Anspruch 9, **dadurch gekennzeichnet, dass** diese Magentit und Aluminiumoxid als Füllstoffe enthält.
